# EUROPEAN PATENT APPLICATION

(11) **EP 3 169 025 A1**
(43) Date of publication of application: **17.05.2017**
(21) Application number: 15819521.4
(22) Date of filing: 29.06.2015
(51) Int. Cl.: H04L 12/771, G06F 9/445, G06F 9/48, G06F 9/50, H04W 88/14

(54) **CONTROL NODE, NODE CREATION SYSTEM AND NODE CREATION METHOD**

(30) Priority: 08.07.2014 JP 2014140937
(71) Applicant: NTT DOCOMO, INC., Chiyoda-ku Tokyo 100-6150 (JP)
(72) Inventor: SHIMOJOU, Takuya, Tokyo 100-6150 (JP); KHAN, Ashiq, Tokyo 100-6150 (JP); TAMURA, Motoshi, Tokyo 100-6150 (JP)
(74) Representative: Viering, Jentschura & Partner mbB Patent- und Rechtsanwälte
(86) International application number: PCT/JP2015/068719
(87) International publication number: WO 2016/006491

(57) **Abstract**

A Controller includes: a creation instruction reception unit that receives a creation instruction to create a target node; a configuration information acquisition unit that transmits identification information of the target node included in the creation instruction to a CookBook and receives target node configuration information including identification information and a scenario of a plurality of functional blocks (FBs) as a response based on the transmission; an arrangement instruction unit that transmits an arrangement instruction to arrange the plurality of FBs in combination, including the identification information of the plurality of FBs included in target node configuration information, to a Repository that stores FBs or a Platform in which the target node is arranged; and a setting instruction unit that transmits a setting instruction to set a scenario included in the target node configuration information to the plurality of FBs arranged based on the arrangement instruction.

## Description

### Technical Field

The present invention relates to a control node, and a node creation system, and a node creation method for combining functional blocks to create a node.

### Background Art

A node which is an element that forms a network such as a core network of a mobile communication network provides applications/services (hereinafter collectively referred to as a service) such as network communications, audio communications, or Machine to Machine (M2M) services to another node or the like. For example, Patent Literature 1 below discloses that Packet Data Network (PDN) Gateway (P-GW) provides IP connectivity dedicated for external PDN to User Equipment (UE).

### Citation List

### Patent Literature

Patent Literature 1: Japanese Patent Application Publication No. 2013-502190

### Summary of Invention

### Technical Problem

A conventional node has a static configuration in which all services are processed at the same node or in the same route (permutation of nodes). Due to this, functions which are not used by many services are implemented or activated, which may lead to an increase in cost. Moreover, since it is expected in future that various services will be developed, there is a problem that it is difficult to add new functions flexibly in the static node configuration.

The present invention has been made in view of the above-described problem, and an object thereof is to provide a control node, a node creation system, and a node creation method capable of creating nodes having a more flexible configuration.

### Solution to Problem

In order to solve the problem, a control node according to an aspect of the present invention is a control node that arranges a plurality of functiononal blocks that provide a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function, the control node including: a creation instruction receiving unit that receives a creation instruction to create the target node, including identification information of the target node; a target node identification information transmitting unit that transmits the identification information of the target node included in the creation instruction to a configuration table storage node that stores a target node configuration table in which the identification information of the target node, identification information of the plurality of functional blocks that form the target node, and the scenario set to each of the plurality of functional blocks are correlated; a configuration information receiving unit that receives target node configuration information including the identification information and the scenario of the plurality of functional blocks correlated with the transmitted identification information of the target node in the target node configuration table as a response based on the transmission of the target node identification information transmitting unit; an arrangement instruction transmitting unit that transmits an arrangement instruction to arrange the plurality of functional blocks in combination, including the identification information of the plurality of functional blocks included in the target node configuration information, to a constituent element storage node that stores functional blocks or an infrastructure node in which the target node is arranged; and a setting instruction transmitting unit that transmits a setting instruction to set the scenario included in the target node configuration information to the plurality of functional blocks arranged based on the arrangement instruction so that the target node is created based on the transmission of the setting instruction.

According to such a control node, first, the creation instruction receiving unit receives a creation instruction to create a target node that provides a specific function. Subsequently, the configuration information receiving unit receives information on a plurality of functional blocks that form the target node and a scenario that defines a processing procedure of each of the plurality of functional blocks. Subsequently, the arrangement instruction receiving unit transmits an arrangement instruction to arrange the plurality of functional blocks that form the target node in combination. Subsequently, the setting instruction transmitting unit transmits a setting instruction to set a scenario to the plurality of functional blocks arranged based on the arrangement instruction and creates the target node based on the transmission of the setting instruction. According to such a configuration, a plurality of functional blocks are arranged in combination and a scenario is set to the respective functional blocks whereby it is possible to create a target node in which each functional block executes processing according to the set scenario so that the entire group of functional blocks provides a specific function. Moreover, it is possible to designate a configuration content or a processing content of a target node to be created in a target node configuration table using information on a plurality of functional blocks that form the target node and the scenario set to each of the plurality of functional blocks. As a result, it is possible to create nodes having a more flexible configuration.

In the control node according to an aspect of the present invention, the creation instruction may further include identification information of the infrastructure node, and the arrangement instruction may further include identification information of the infrastructure node included in the creation instruction and indicate an instruction to arrange the plurality of functional blocks in the infrastructure node in combination. According to such a configuration, it is possible to easily and reliably designate a position at which the target node is created.

The control node according to an aspect of the present invention may further include: a state table storing unit that stores a target node state table in which the identification information of the created target node and information on the plurality of functional blocks that form the created target node are correlated; a change instruction receiving unit that receives a change instruction to change the created target node to a changed target node, including the identification information of the created target node and identification information of the changed target node; and a target node changing unit that acquires the information on the plurality of functional blocks correlated with the identification information of the created target node included in the change instruction in the target node state table, receives the target node configuration information including a changed scenario which is the scenario correlated with the identification information of the changed target node included in the change instruction by controlling the configuration information receiving unit, and transmits a setting instruction to set the changed scenario to the plurality of functional blocks corresponding to the acquired information on the plurality of functional blocks by controlling the setting instruction transmitting unit so that the created target node is changed to the changed target node based on the transmission of the setting instruction. According to such a configuration, a scenario for realizing the function of a desired target node (the changed target node) is set to the plurality of functional blocks that form the created target node. As a result, it is possible to easily and reliably change the created target node to a desired target node.

In the control node according to an aspect of the present invention, the target node state table may further correlate the scenario set to each of the plurality of functional blocks that form the created target node, and the target node changing unit may further acquire a scenario before change which is the scenario correlated with the identification information of the created target node included in the change instruction in the target node state table, compare the scenario before change with the changed scenario to determine a difference between the plurality of functional blocks that form the created target node and the plurality of functional blocks that form the changed target node, and change the plurality of functional blocks that form the created target node based on the determined difference. According to such a configuration, it is possible to reliably determine which one of the plurality of functional blocks that form the created target node is to be changed to change the created target node to a desired target node, for example. As a result, it is possible to more easily and more reliably change the created target node to a desired target node.

In order to solve the problem, a node creation system according to an aspect of the present invention is a node creation system including: a control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function; a configuration table storage node that stores a target node configuration table in which identification information of the target node, identification information of the plurality of functional blocks that form the target node, and a scenario set to each of the plurality of functional blocks are correlated; and a constituent element storage node that stores functional blocks, wherein the control node includes: a creation instruction receiving unit that receives a creation instruction to create the target node, including identification information of the target node; a target node identification information transmitting unit that transmits the identification information of the target node included in the creation instruction to the configuration table storage node; a configuration information receiving unit that receives target node configuration information; an arrangement instruction transmitting unit that transmits an arrangement instruction to arrange the plurality of functional blocks in combination, including the identification information of the plurality of functional blocks included in the target node configuration information, to the constituent element storage node; and a setting instruction transmitting unit that transmits a setting instruction to set the scenario included in the target node configuration information to the plurality of functional blocks arranged based on the arrangement instruction so that the target node is created based on the transmission of the setting instruction, the configuration table storage node includes: a target node identification information receiving unit that receives the identification information of the target node transmitted by the target node identification information transmitting unit; and a configuration information transmitting unit that transmits target node configuration information including the identification information and the scenario of the plurality of functional blocks correlated with the identification information of the target node received by the target node identification information receiving unit in the target node configuration table to the control node, and the constituent element storage node includes: an arrangement instruction receiving unit that receives the arrangement instruction transmitted by the arrangement instruction transmitting unit; and an arranging unit that arranges stored functional blocks corresponding to the identification information of the plurality of functional blocks included in the arrangement instruction.

According to such a node creation system, it is possible to create a target node by collaboration of the control node, the configuration table storage node, and the constituent element storage node. That is, a plurality of functional blocks are arranged in combination, and a scenario is set to each of the respective arranged functional blocks whereby it is possible to create a target node in which each functional block executes processing according to the set scenario so that the entire group of functional blocks provides a specific function. Moreover, it is possible to designate a configuration content or a processing content of a target node to be created in a target node configuration table using information on a plurality of functional blocks that form the target node and the scenario set to each of the plurality of functional blocks. As a result, it is possible to create nodes having a more flexible configuration.

In order to solve the problem, a node creation system according to an aspect of the present invention is a node creation system including: a control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function; a configuration table storage node that stores a target node configuration table in which identification information of the target node, identification information of the plurality of functional blocks that form the target node, and a scenario set to each of the plurality of functional blocks are correlated; and an infrastructure node in which the target node is arranged, wherein the control node includes: a creation instruction receiving unit that receives a creation instruction to create the target node, including identification information of the target node; a target node identification information transmitting unit that transmits the identification information of the target node included in the creation instruction to the configuration table storage node; a configuration information receiving unit that receives target node configuration information; an arrangement instruction transmitting unit that transmits an arrangement instruction to arrange the plurality of functional blocks in combination, including the identification information of the plurality of functional blocks included in the target node configuration information, to an infrastructure node in which the target node is arranged; and a setting instruction transmitting unit that transmits a setting instruction to set the scenario included in the target node configuration information to the plurality of functional blocks arranged based on the arrangement instruction so that the target node is created based on the transmission of the setting instruction, the configuration table storage node includes: a target node identification information receiving unit that receives the identification information of the target node transmitted by the target node identification information transmitting unit; and a configuration information transmitting unit that transmits target node configuration information including the identification information and the scenario of the plurality of functional blocks correlated with the identification information of the target node received by the target node identification information receiving unit in the target node configuration table to the control node, and the infrastructure node includes: an arrangement instruction receiving unit that receives the arrangement instruction transmitted by the arrangement instruction transmitting unit; and an arranging unit that arranges functional blocks corresponding to the identification information of the plurality of functional blocks included in the arrangement instruction.

According to such a node creation system, it is possible to create a target node by collaboration of the control node, the configuration table storage node, and the infrastructure node. That is, a plurality of functional blocks are arranged in combination, and a scenario is set to each of the respective arranged functional blocks whereby it is possible to create a target node in which each functional block executes processing according to the set scenario so that the entire group of functional blocks provides a specific function. Moreover, it is possible to designate a configuration content and a processing content of a target node to be created in a target node configuration table using information on a plurality of functional blocks that form the target node and the scenario set to each of the plurality of functional blocks. As a result, it is possible to create nodes having a more flexible configuration.

An aspect of the present invention can be described as inventions of a node creation method as follows instead of the inventions of the control node and the node creation system described above. These inventions fall into different categories but are substantially the same inventions and achieve the same operation and effects.

That is, a node creation method according to an aspect of the present invention is a node creation method executed by a control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function, the node creation method including: a creation instruction receiving step of receiving a creation instruction to create the target node, including identification information of the target node; a target node identification information transmitting step of transmitting the identification information of the target node included in the creation instruction to a configuration table storage node that stores a target node configuration table in which the identification information of the target node, identification information of the plurality of functional blocks that form the target node, and the scenario set to each of the plurality of functional blocks are correlated; a configuration information receiving step of receiving target node configuration information including the identification information and the scenario of the plurality of functional blocks correlated with the transmitted identification information of the target node in the target node configuration table as a response based on the transmission in the target node identification information transmitting step; an arrangement instruction transmitting step of transmitting an arrangement instruction to arrange the plurality of functional blocks in combination, including the identification information of the plurality of functional blocks included in the target node configuration information, to a constituent element storage node that stores functional blocks or an infrastructure node in which the target node is arranged; and a setting instruction transmitting step of transmitting a setting instruction to set the scenario included in the target node configuration information to the plurality of functional blocks arranged based on the arrangement instruction so that the target node is created based on the transmission of the setting instruction.

A node creation method according to an aspect of the present invention is a node creation method executed by a node creation system including: a control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function; a configuration table storage node that stores a target node configuration table in which identification information of the target node, identification information of the plurality of functional blocks that form the target node, and a scenario set to each of the plurality of functional blocks are correlated; and a constituent element storage node that stores functional blocks, the node creation method including: a creation instruction receiving step of allowing the control node to receive a creation instruction to create the target node, including identification information of the target node; a target node identification information transmitting step of allowing the control node to transmit the identification information of the target node included in the creation instruction to the configuration table storage node; a target node identification information receiving step of allowing the configuration table storage node to receive the identification information of the target node transmitted in the target node identification information transmitting step; a configuration information transmitting step of allowing the configuration table storage node to transmit target node configuration information including the identification information and the scenario of the plurality of functional blocks correlated with the identification information of the target node received in the target node identification information receiving step in the target node configuration table to the control node; a configuration information receiving step of allowing the control node to receive target node configuration information; an arrangement instruction transmitting step of allowing the control node to transmit an arrangement instruction to arrange the plurality of functional blocks in combination, including the identification information of the plurality of functional blocks included in the target node configuration information, to the constituent element storage node; an arrangement instruction receiving step of allowing the constituent element storage node to receive the arrangement instruction transmitted in the arrangement instruction transmitting step; an arranging step of allowing the constituent element storage node to arrange stored functional blocks corresponding to the identification information of the plurality of functional blocks included in the arrangement instruction; and a setting instruction transmitting step of allowing the control node to transmit a setting instruction to set the scenario included in the target node configuration information to the plurality of functional blocks arranged based on the arrangement instruction so that the target node is created based on the transmission of the setting instruction.

A node creation method according to an aspect of the present invention is a node creation method executed by a node creation system including: a control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function; a configuration table storage node that stores a target node configuration table in which identification information of the target node, identification information of the plurality of functional blocks that form the target node, and a scenario set to each of the plurality of functional blocks are correlated; and an infrastructure node in which the target node is arranged, the node creation method including: a creation instruction receiving step of allowing the control node to receive a creation instruction to create the target node, including identification information of the target node; a target node identification information transmitting step of allowing the control node to transmit the identification information of the target node included in the creation instruction to the configuration table storage node; a target node identification information receiving step of allowing the configuration table storage node to receive the identification information of the target node transmitted in the target node identification information transmitting step; a configuration information transmitting step of allowing the configuration table storage node to transmit target node configuration information including the identification information and the scenario of the plurality of functional blocks correlated with the identification information of the target node received in the target node identification information receiving step in the target node configuration table to the control node; a configuration information receiving step of allowing the control node to receive target node configuration information; an arrangement instruction transmitting step of allowing the control node to transmit an arrangement instruction to arrange the plurality of functional blocks in combination, including the identification information of the plurality of functional blocks included in the target node configuration information, to the infrastructure node; an arrangement instruction receiving step of allowing the infrastructure node to receive the arrangement instruction transmitted in the arrangement instruction transmitting step; an arranging step of allowing the infrastructure node to arrange functional blocks corresponding to the identification information of the plurality of functional blocks included in the arrangement instruction; and a setting instruction transmitting step of allowing the control node to transmit a setting instruction to set the scenario included in the target node configuration information to the plurality of functional blocks arranged based on the arrangement instruction so that the target node is created based on the transmission of the setting instruction.

### Advantageous Effects of Invention

According to the aspects of the present invention, it is possible to create nodes having a more flexible configuration.

### Brief Description of Drawings

FIG. 1 is a system configuration diagram of a node creation system including a control node according to an embodiment of the present invention.
FIG. 2 is a diagram illustrating a hardware configuration of a management node, a control node, a configuration table storage node, a constituent element storage node, and an infrastructure node according to an embodiment of the present invention.
FIG. 3 is a diagram illustrating a configuration example of functional blocks that form a P-GW node.
FIG. 4 is a diagram illustrating an example of a scenario set to functional blocks that form a P-GW node.
FIG. 5 is a diagram illustrating an example of a packet header transmitted and received during processing in the P-GW node.
FIG. 6 is a sequence diagram illustrating an example of processing executed between functional blocks in the P-GW node.
FIG. 7 is a functional block diagram of a management node according to an embodiment of the present invention.
FIG. 8 is a functional block diagram of a control node according to an embodiment of the present invention.
FIG. 9 is a diagram illustrating an example of a target node state table stored in a control node according to an embodiment of the present invention.
FIG. 10 is a functional block diagram of a configuration table storage node according to an embodiment of the present invention.
FIG. 11 is a diagram illustrating an example of a target node configuration table stored in a configuration table storage node according to an embodiment of the present invention.
FIG. 12 is a functional block diagram of a constituent element storage node according to an embodiment of the present invention.
FIG. 13 is a functional block diagram of an infrastructure node according to an embodiment of the present invention.
FIG. 14 is a sequence diagram illustrating an example of processing (provisioning) executed by a node creation system.
FIG. 15 is a sequence diagram illustrating an example of processing (dynamic removing by changing scenario) executed by a node creation system.
FIG. 16 is a sequence diagram illustrating an example of processing (dynamic adding by changing scenario) executed by a node creation system.

### Description of Embodiments

Hereinafter, an embodiment of a control node, a node creation system, and a node creation method according to the present invention will be described in detail with reference to the drawings. In description of the drawings, the same elements will be denoted by the same reference numerals, and redundant description thereof will not be provided.

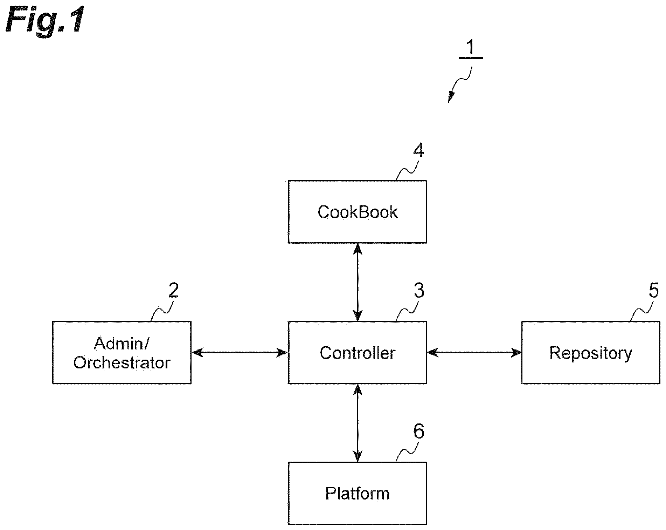

FIG. 1 is a system configuration diagram of a node creation system 1 including a Controller 3 (a control node) according to an embodiment of the present invention. As illustrated in FIG. 1, the node creation system 1 is configured to include an Admin/Orchestrator 2 (a management node), the Controller 3, a CookBook 4 (a configuration table storage node), a Repository 5 (a constituent element storage node), and a Platform 6 (an infrastructure node). The Admin/Orchestrator 2 and the Controller 3, the Controller 3 and the CookBook 4, the Controller 3 and the Repository 5, and the Controller 3 and the Platform 6 are configured to be able to communicate with each other via a network or the like. The Repository 5 and the Platform 6 may be configured to be able to communicate with each other via a network or the like.

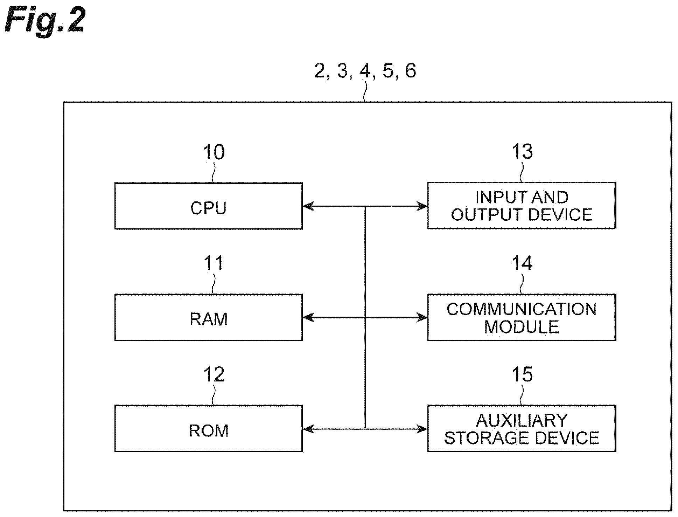

The Admin/Orchestrator 2, the Controller 3, the CookBook 4, and the Repository 5 are configured as hardware such as a CPU. FIG. 2 is a diagram illustrating an example of a hardware configuration of each of the Admin/Orchestrator 2, the Controller 3, the CookBook 4, and the Repository 5. As illustrated in FIG. 2, the Admin/Orchestrator 2, the Controller 3, the CookBook 4, and the Repository 5 illustrated in FIG. 1 are each configured as a computer system including a CPU 10, a RAM 11 and a ROM 12 which are main storage devices, an input and output device 13 such as a display, a communication module 14, an auxiliary storage device 15, and the like.

The functions of functional blocks (to be described later) of each of the Admin/Orchestrator 2, the Controller 3, the CookBook 4, and the Repository 5 illustrated in FIG. 1 are realized when predetermined computer software is read onto hardware such as the CPU 10 or the RAM 11 illustrated in FIG. 2 to operate the input and output device 13, the communication module 14, and the auxiliary storage device 15 under the control of the CPU 10 and to read and write data from and to the RAM 11.

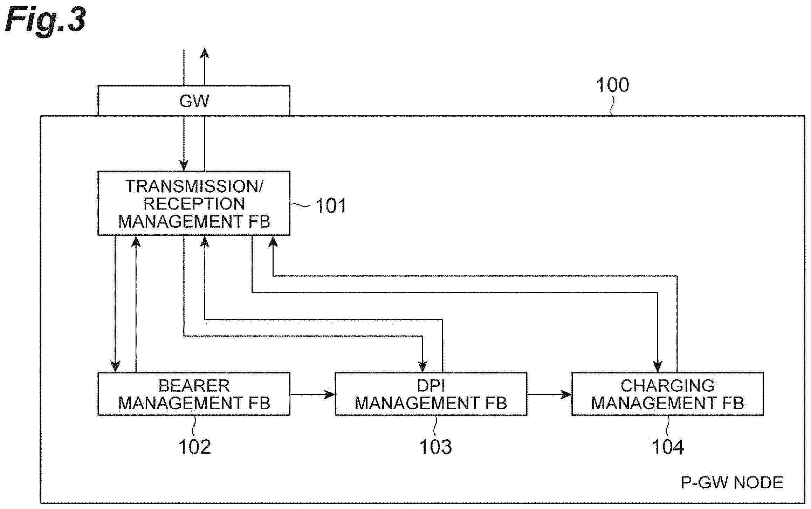

The node creation system 1 creates a target node that provides a specific function by collaboration of the Admin/Orchestrator 2, the Controller 3, the CookBook 4, and the Repository 5. Specifically, a plurality of functional blocks (FB, Function Block) that provides predetermined functions are arranged in combination, and a scenario that defines a processing procedure of each FB or all FBs is set for each of the arranged FBs to thereby create a target node in which each FB executes processing according to the set scenario so that the entire group of FBs provides a specific function. Hereinafter, a target node, a FB, a scenario, and the like will be described with reference to FIGS. 3 to 6.

FIG. 3 is a diagram illustrating a configuration example of FBs that form a P-GW node 100 which is a specific example of a target node. As illustrated in FIG. 3, the P-GW node 100 is configured to include a transmission/reception management FB 101, a bearer management FB 102, a Deep Packet Inspection (DPI: packet selected to be provided as information to police or the like) management FB 103, and a charging management FB 104. Moreover, as illustrated in FIG. 3, the transmission/reception management FB 101 and the bearer management FB 102, the transmission/reception management FB 101 and the DPI management FB 103, and the transmission/reception management FB 101 and the charging management FB 104 are configured in a star form so as to be able to communicate with each other via a network or the like. The network configuration is not limited to a star form and these FBs may be configured in other network configurations such as a ring form. The P-GW node 100 is an example of a target node in which the transmission/reception management FB 101, the bearer management FB 102, the DPI management FB 103, and the charging management FB 104 are arranged in combination by the node creation system 1.

Here, a FB is a smallest unit that forms a target node (that is, the target node is a group of a plurality of FBs) and the FB provides a predetermined function and has a common interface (Input In, Output Out, and Management Mng). For example, the transmission/reception management FB 101 provides a transmission and reception management function in P-GW, the bearer management FB 102 provides a bearer management function in P-GW, the DPI management FB 103 provides a DPI management function in P-GW, and the charging management FB 104 provides a charging management function in P-GW. As an implementation example, one FB is configured as one VM (Virtual Machine) and FBs in a target node are L2-coupled. On the other hand, nodes are L3-coupled. Moreover, as illustrated in FIG. 3, each node has one Gateway (GW).

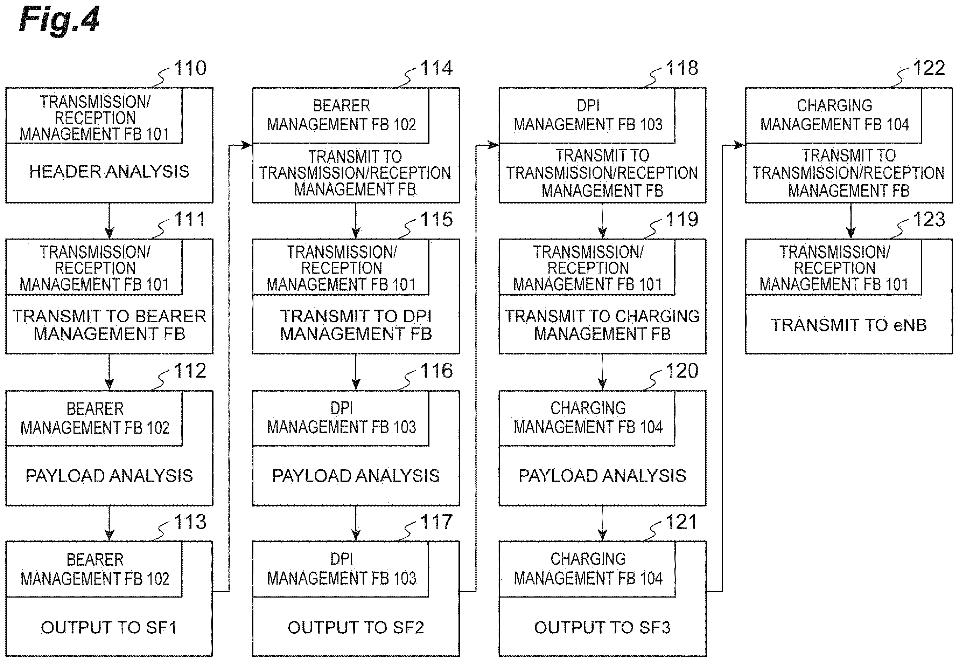

FIG. 4 is a diagram illustrating an example (C-Plane process) of a scenario set to FBs that form the P-GW node 100. A uniform scenario is set to (stored in) all FBs in the P-GW node 100. As illustrated in FIG. 4, the scenario is defined in a flowchart form in which processing units (reference numerals 110 to 123) which define processing in each FB are connected. For example, a processing unit 110 illustrated in FIG. 4 indicates that the transmission/reception management FB 101 performs a header analysis process and the flow proceeds to a processing unit 111.

The node creation system 1 sets the scenario illustrated in FIG. 4 to the transmission/reception management FB 101, the bearer management FB 102, the DPI management FB 103, and the charging management FB 104 to thereby create the P-GW node 100 in which each FB executes processing according to the set scenario so that the entire group of FBs provides the function of the P-GW.

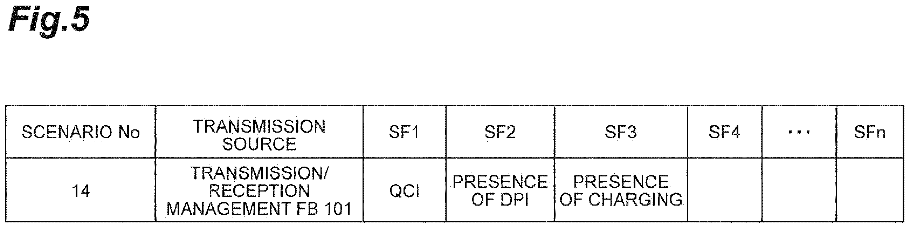

FIG. 5 is a diagram illustrating an example of a packet header transmitted and received during processing in the P-GW node 100. As illustrated in FIG. 5, a packet header includes a scenario number (No), a transmission source, and a Scenario Field (SF). The scenario No is a unique number incremented whenever proceeding from one processing unit to another processing unit. The transmission source is identification information of a FB of a transmission source. The SF stores values output by some processing units. The packet header illustrated in FIG. 5 indicates a final packet header when the scenario illustrated in FIG. 4 is executed by the P-GW node 100. When a scenario is executed, first, each processing unit checks a transmission source. Subsequently, a processing result is written to an output portion of the SF, and the processing result is transmitted to a subsequent destination according to the scenario.

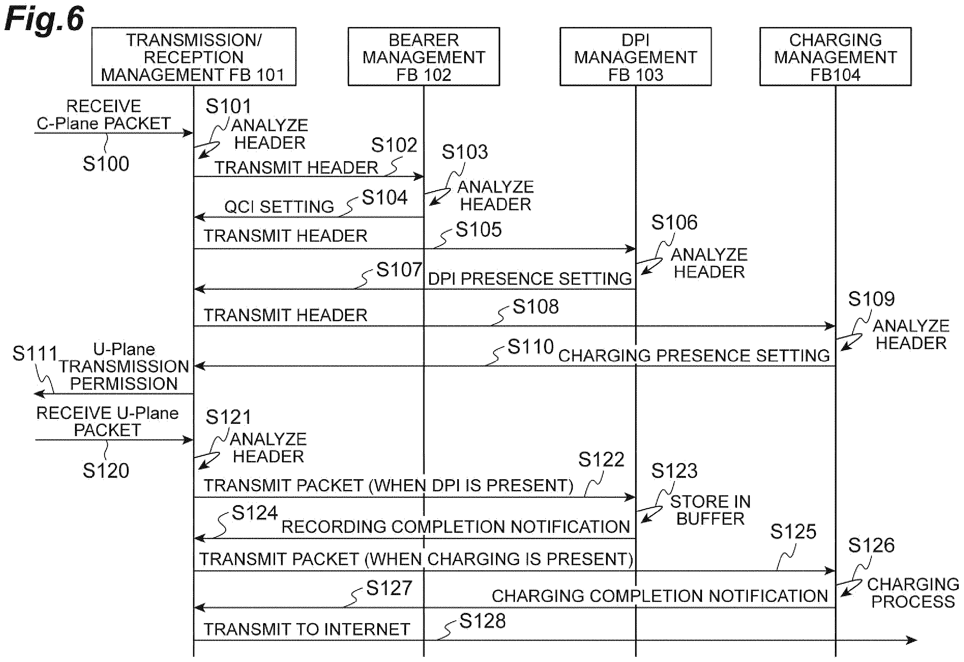

FIG. 6 is a sequence diagram illustrating an example of processing executed between FBs in the P-GW node 100. First, C-Plane processing will be described. First, the transmission/reception management FB 101 receives a C-Plane packet (S100). Subsequently, the transmission/reception management FB 101 performs header analysis (GPRS Tunneling Protocol (GTP)-c, Proxy Mobile IP (PMIP)) (S101). Subsequently, the transmission/reception management FB 101 transmits the header to the bearer management FB 102 (S102). Subsequently, the bearer management FB 102 performs header analysis (QoS Class Identifier (QCI) determination) (S103). Subsequently, the bearer management FB 102 transmits a QCI setting to the transmission/reception management FB 101 (S104).

Subsequently, the transmission/reception management FB 101 transmits the header to the DPI management FB 103 (S105). Subsequently, the DPI management FB 103 performs header analysis (determination on presence of DPI) (S106). Subsequently, the DPI management FB 103 transmits a DPI presence setting to the transmission/reception management FB 101 (S107).

Subsequently, the transmission/reception management FB 101 transmits the header to the charging management FB 104 (S108). Subsequently, the charging management FB 104 performs header analysis (determination on presence of charging) (S109). Subsequently, the charging management FB 104 transmits a charging presence setting to the transmission/reception management FB 101 (S110). Moreover, the transmission/reception management FB 101 transmits U-Plane transmission permission to a transmission source node.

Next, U-Plane processing will be described. First, the transmission/reception management FB 101 receives a U-Plane packet (S120). Subsequently, the transmission/reception management FB 101 performs header analysis (GTP) (S121). Subsequently, when DPI is present, the transmission/reception management FB 101 transmits the packet to the DPI management FB 103 (S122). Subsequently, the DPI management FB 103 records the packet in a buffer (S 123). Subsequently, the DPI management FB 103 transmits a recording completion notification to the transmission/reception management FB 101 (S124).

Subsequently, when charging is present, the transmission/reception management FB 101 transmits the packet to the charging management FB 104 (S125). Subsequently, the charging management FB 104 performs a charging process (S126). Subsequently, the charging management FB 104 transmits a charging completion notification to the transmission/reception management FB 101 (S127). Moreover, the transmission/reception management FB 101 transmits the packet to the Internet (S128).

Next, functional blocks of each node illustrated in FIG. 1 will be described.

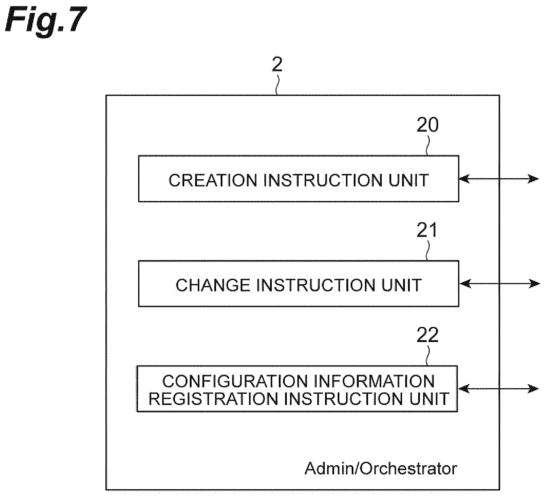

FIG. 7 is a functional block diagram of the Admin/Orchestrator 2. As illustrated in FIG. 7, the Admin/Orchestrator 2 is configured to include a creation instruction unit 20, a change instruction unit 21, and a configuration information registration instruction unit 22.

The creation instruction unit 20 issues a node creation instruction to the Controller 3. Specifically, the creation instruction unit 20 transmits a creation instruction (creation instruction information) to create the target node, including identification information of the target node (an ID, a node name, or the like of the target node) and a creation position at which the target node is created (a physical position, a logical position, identification information of the Platform 6, or the like), to the Controller 3.

The change instruction unit 21 issues a node change instruction to the Controller 3. Specifically, the change instruction unit 21 transmits a change instruction (change instruction information) to change the created target node to a changed target node, including identification information of the created target node, the creation position at which the created target node was created, and identification information of the changed target node, to the Controller 3. The change instruction unit 21 performs adding and removing of a FB that forms the target node by issuing the node change instruction.

The configuration information registration instruction unit 22 issues an instruction to register a target node configuration table to be described later to the Controller 3. Specifically, the configuration information registration instruction unit 22 transmits a registration instruction (registration instruction information) to register (add or remove) the target node configuration table, including the target node configuration table or partial data of the target node configuration table, to the Controller 3. The configuration information registration instruction unit 22 may issue a FB registration instruction to the Controller 3. Specifically, the configuration information registration instruction unit 22 transmits a registration instruction to register (add or remove) a FB, including a FB to be registered newly or identification information of a FB to be removed, to the Controller 3.

The Admin/Orchestrator 2 may independently transmit the creation instruction, the change instruction, or the registration instruction to the Controller 3 based on a behavior (processing content) set in advance by a user.

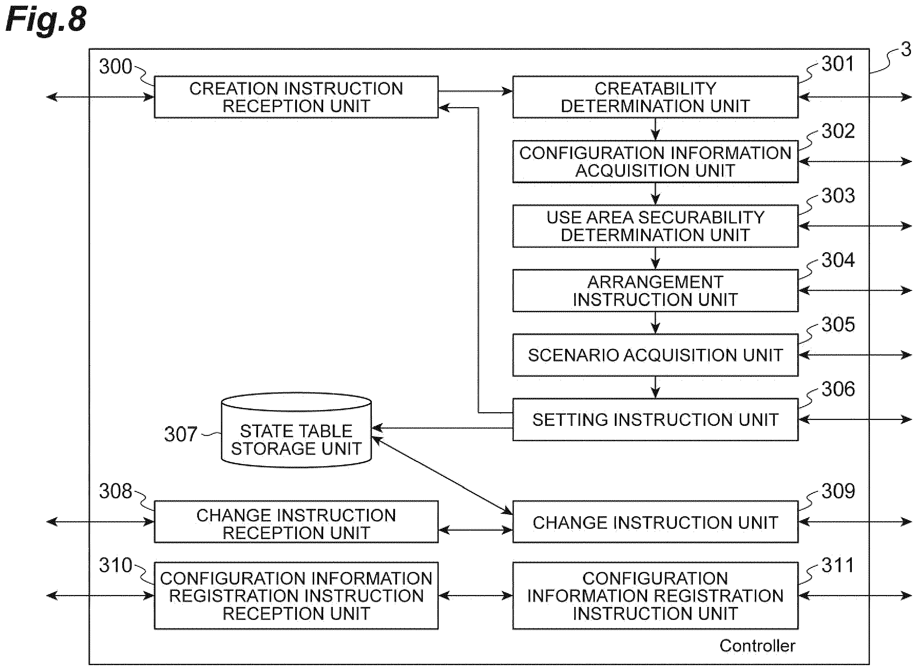

FIG. 8 is a functional block diagram of the Controller 3. As illustrated in FIG. 8, the Controller 3 is configured to include a creation instruction reception unit 300 (a creation instruction receiving unit), a creatability determination unit 301, a configuration information acquisition unit 302 (a target node identification information transmitting unit, a configuration information receiving unit), a use area securability determination unit 303, an arrangement instruction unit 304 (an arrangement instruction transmitting unit), a scenario acquisition unit 305, a setting instruction unit 306 (a setting instruction transmitting unit), a state table storage unit 307 (a state table storing unit), a change instruction reception unit 308 (a change instruction receiving unit), a change instruction unit 309 (a target node changing unit), a configuration information registration instruction reception unit 310, and a configuration information registration instruction unit 311.

The creation instruction reception unit 300 receives a creation instruction from the Admin/Orchestrator 2.

When the creation instruction reception unit 300 receives a creation instruction, the creatability determination unit 301 searches the CookBook 4 to check whether a target node identified by the identification information of the target node included in the creation instruction is stored in the target node configuration table (to be described later) of the CookBook 4 (that is, whether the target node can be created). Moreover, the creatability determination unit 301 receives a result on creatability from the CookBook 4 as a response based on the search and determines the creatability When the creatability determination unit 301 determines that the target node can be created, the flow proceeds to the processing of the configuration information acquisition unit 302 to be described later. On the other hand, when the creatability determination unit 301 determines that the target node cannot be created, the creatability determination unit 301 sends a notification of non-creatability to the Admin/Orchestrator 2 via the creation instruction reception unit 300.

When the creation instruction reception unit 300 receives the creation instruction (the processing of the creatability determination unit 301 is omitted) or the creatability determination unit 301 determines that the target node can be created, the configuration information acquisition unit 302 transmits the identification information of the target node included in the creation instruction received by the creation instruction reception unit 300 to the CookBook 4 and receives target node configuration information including the identification information of the plurality of FBs correlated with the transmitted identification information of the target node in the target node configuration table of the CookBook 4, the identification information of the Repository 5, the scenario (or a pointer to the scenario stored in the Repository 5), a memory capacity, and a creation time as a response based on the transmission. The details of the target node configuration table will be described later.

When the configuration information acquisition unit 302 receives the target node configuration information, the use area securability determination unit 303 checks the creation position included in the creation instruction received by the creation instruction reception unit 300. In the present embodiment, it is assumed that the Platform 6 is designated as the creation position. Subsequently, the use area securability determination unit 303 searches the designated Platform 6 to check whether a use area for creating the target node can be secured. When performing the search, the use area securability determination unit 303 transmits a memory capacity included in the target node configuration information received by the configuration information acquisition unit 302, and when the use area can be secured, an instruction to reserve or secure the area to the Platform 6. Moreover, the use area securability determination unit 303 receives a response regarding the securability of the use area from the Platform 6 based on the search and determines the securability of the use area. When it is determined that the use area can be secured, the use area securability determination unit 303 transmits an instruction to secure the use area from the Platform 6 and the flow proceeds to the processing of the arrangement instruction unit 304 (to be described later). When the use area securability determination unit 303 determines that the use area can be secured, the use area securability determination unit 303 may send a notification of securability of the use area to the Admin/Orchestrator 2 via the creation instruction reception unit 300. On the other hand, when it is determined that the use area cannot be secured, the use area securability determination unit 303 sends a notification of non-securability of the use area to the Admin/Orchestrator 2 via the creation instruction reception unit 300. When the use area can be secured, the use area securability determination unit 303 has transmitted the instruction to secure the area, and the use area can be secured in the Platform 6, the Platform 6 secures the area. Moreover, the use area securability determination unit 303 receives a notification of the creatability indicating the area has been secured instead of the securability of the use area and determines that the use area can be secured and has been actually secured, and the flow proceeds to the processing of the arrangement instruction unit 304 (to be described later).

When the use area securability determination unit 303 determines that the use area can be secured or has been secured, the arrangement instruction unit 304 transmits an arrangement instruction to arrange the plurality of FBs in combination, including the identification information of the plurality of FBs included in the target node configuration information received by the configuration information acquisition unit 302 and the creation position (the Platform 6) included in the creation instruction received by the creation instruction reception unit 300, to the Repository 5 identified by the identification information of the Repository 5 included in the target node configuration information received by the configuration information acquisition unit 302. Moreover, when the use area securability determination unit 303 determines that the use area can be secured or has been secured, the arrangement instruction unit 304 may transmit an arrangement instruction to arrange the plurality of FBs in combination, including the identification information of the plurality of FBs included in the target node configuration information received by the configuration information acquisition unit 302, to the Platform 6 which is the creation position included in the creation instruction received by the creation instruction reception unit 300. The arrangement instruction unit 304 may receive an arrangement completion notification indicating that arrangement based on the arrangement instruction is completed from the arranged target node as a response based on the transmission. The arrangement completion notification includes position information or the like of the plurality of FBs that form the arranged target node, and the Controller 3 can specify the plurality of FBs that form the arranged target node based on the position information.

When the pointer to the scenario stored in the Repository 5 rather than the scenario is included in the target node configuration information received by the configuration information acquisition unit 302, the arrangement instruction is transmitted by the arrangement instruction unit 304, or the arrangement completion notification is received by the arrangement instruction unit 304, the scenario acquisition unit 305 transmits a request to acquire the scenario indicated by the pointer to the Repository 5. The scenario acquisition unit 305 receives the scenario from the Repository 5 as a response to the transmission.

The setting instruction unit 306 transmits a setting instruction to set the scenario included in the target node configuration information or the scenario received by the scenario acquisition unit 305 to the plurality of FBs arranged based on the arrangement instruction issued by the arrangement instruction unit 304. The target node is created on the Platform 6 based on the transmission of the setting instruction. Specifically, when the arrangement instruction is transmitted by the arrangement instruction unit 304, the arrangement completion notification is received by the arrangement instruction unit 304, or the scenario is received by the scenario acquisition unit 305, the setting instruction unit 306 transmits a setting instruction to set the scenario included in the target node configuration information or the scenario received by the scenario acquisition unit 305 to the plurality of FBs arranged based on the arrangement instruction issued by the arrangement instruction unit 304. Moreover, the setting instruction unit 306 receives a scenario update completion notification indicating that setting of scenario has been completed from the target node as a response based on the transmission and transmits a creation completion notification indicating that creation of the target node has been completed to the Admin/Orchestrator 2 via the creation instruction reception unit 300.

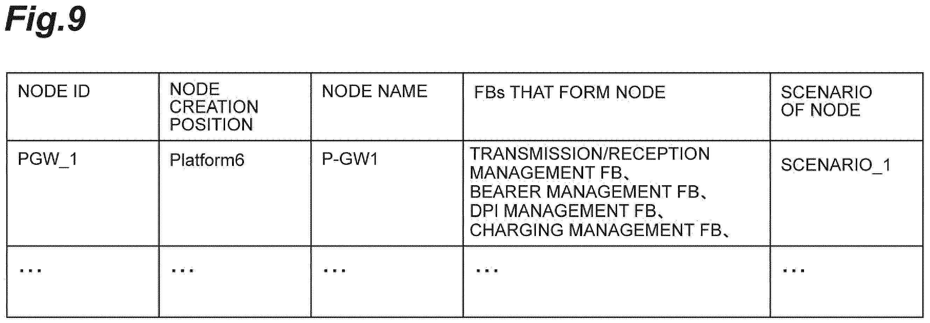

The state table storage unit 307 stores the target node state table in which the identification information of the target node which has been created (is currently operating), the creation position of the target node, the node name of the target node, the plurality of FBs (the information thereof) that form the target node, and the scenario set to the plurality of FBs are correlated with each other. The information on the plurality of FBs that form the target node may include the position information of the plurality of FBs. FIG. 9 is a diagram illustrating an example of the target node state table stored in the state table storage unit 307.

The change instruction reception unit 308 receives a change instruction from the Admin/Orchestrator 2.

The change instruction unit 309 acquires the information on the plurality of FBs correlated with the identification information of the created target node included in the change instruction received by the change instruction reception unit 308 in the target node state table stored in the state table storage unit 307, receives the target node configuration information including the changed scenario which is the scenario correlated with the identification information of the changed target node included in the change instruction based on the processing of the configuration information acquisition unit 302 by controlling the configuration information acquisition unit 302, and transmits a setting instruction to set the changed scenario to the plurality of FBs corresponding to the acquired information on the plurality of FBs based on the processing of the setting instruction unit 306 by controlling the setting instruction unit 306. The created target node is changed to the changed target node based on the transmission of the setting instruction.

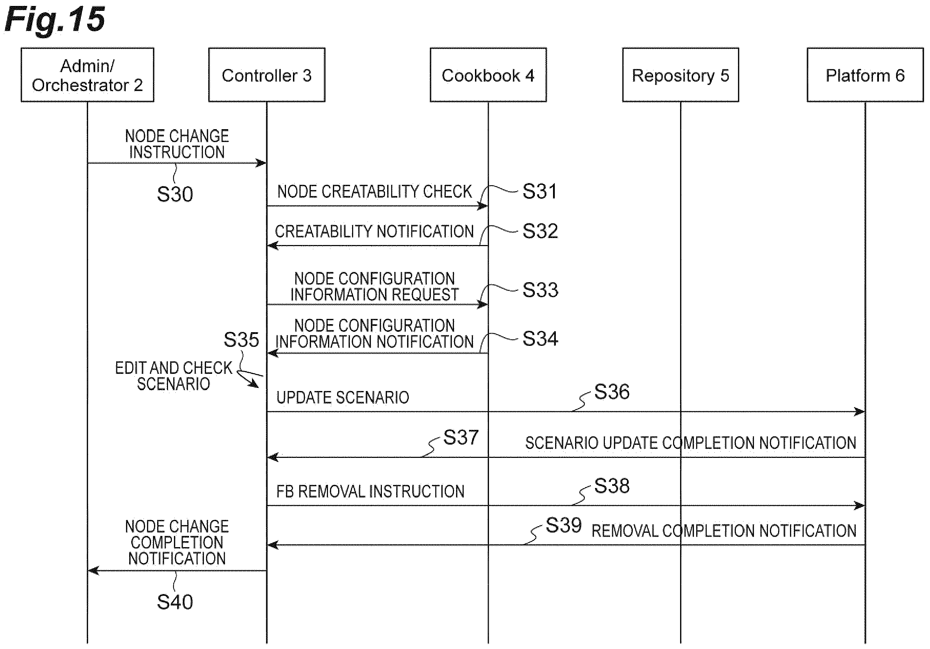

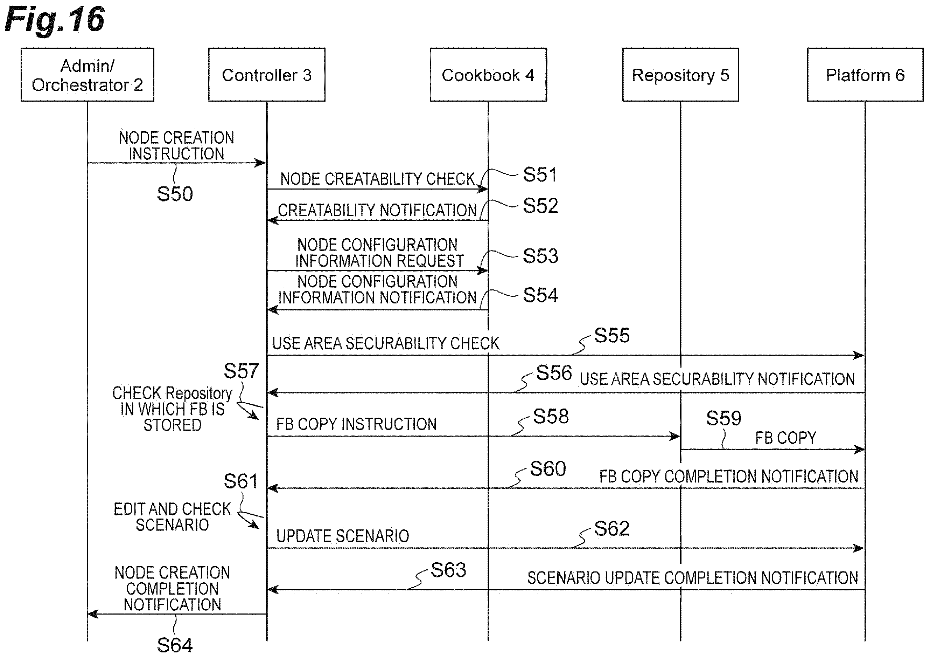

Furthermore, the change instruction unit 309 may acquire the scenario before change which is the scenario correlated with the identification information of the created target node included in the change instruction in the target node state table, compare the scenario before change with the changed scenario to determine a difference between the plurality of FBs that form the created target node and the plurality of FBs that form the changed target node, and change the plurality of FBs that form the created target node based on the determined difference. For example, when it is determined based on the determination result that it is necessary to remove a FB in the target node, the change instruction unit 309 logically removes the FB by updating the scenario for all FBs in the target node and then physically removes the FB (see the sequence diagram in FIG. 15). On the other hand, when it is determined based on the determination result that it is necessary to add a FB in the target node, the change instruction unit 309 creates a FB and then updates the scenario for all FBs in the target node (see the sequence diagram in FIG. 16).

The configuration information registration instruction reception unit 310 receives a registration instruction to register the target node configuration table or the FB.

The configuration information registration instruction unit 311 transmits the registration instruction received by the configuration information registration instruction reception unit 310 to the registration target CookBook 4 or Repository 5

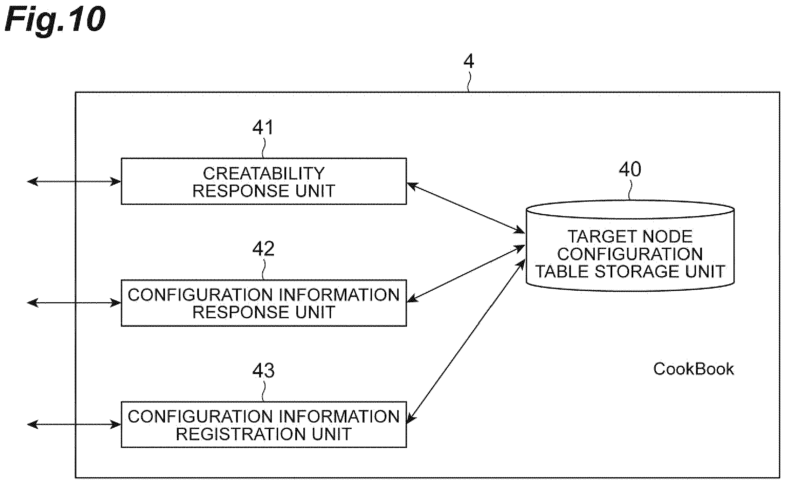

FIG. 10 is a functional block diagram of the CookBook 4. As illustrated in FIG. 10, the CookBook 4 is configured to include a target node configuration table storage unit 40, a creatability response unit 41, a configuration information response unit 42 (a target node identification information receiving unit, a configuration information transmitting unit), and a configuration information registration unit 43.

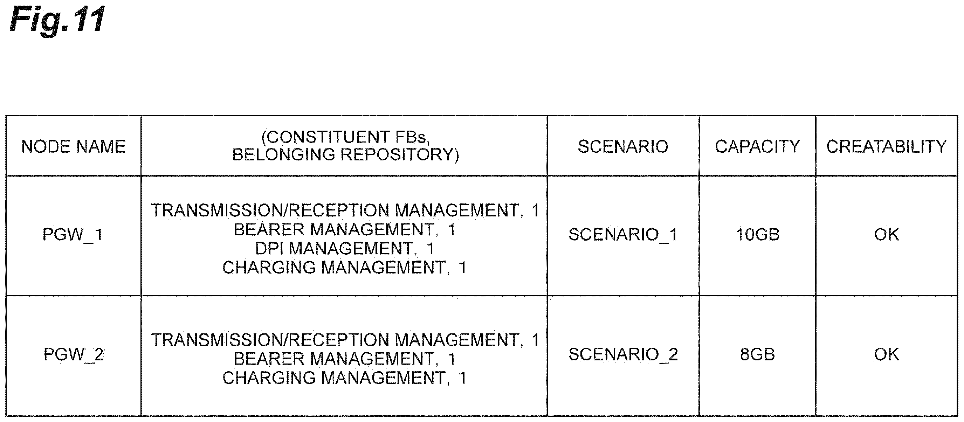

The target node configuration table storage unit 40 stores the target node configuration table. FIG. 11 is a diagram illustrating an example of the target node configuration table stored in the target node configuration table storage unit 40. As illustrated in FIG. 11, the target node configuration table receives target node configuration information including the identification information of the target node, the identification information of the plurality of FBs that form the target node, the identification information of the Repository 5 in which the FBs are stored, the scenario (or the pointer to the scenario stored in the Repository 5) set to each of the plurality of FBs, a memory capacity, and creatability. The target node configuration table may further correlate a creation time or the like of the target node. Moreover, the target node configuration table storage unit 40 periodically communicates with the Repository 5 and stores the creatability of whether the target node can be created (whether the corresponding FB is stored in the Repository 5) in the target node configuration table.

The creatability response unit 41 receives a creatability checking request including the identification information of the target node, transmitted from the Controller 3, determines whether the identification information of the target node is included in the target node configuration table stored in the target node configuration table storage unit 40, and sends the determination result to the Controller 3 as a creatability result.

The configuration information response unit 42 receives the identification information of the target node from the Controller 3 and sends the target node configuration information including the identification information of the plurality of FBs correlated with the received identification information of the target node in the target node configuration table stored in the target node configuration table storage unit 40, the identification information of the Repository 5, the scenario (or the pointer to the scenario stored in the Repository 5), a memory capacity, and a creation time to the Controller 3.

The configuration information registration unit 43 receives the target node configuration table transmitted from the Controller 3 and registers the target node configuration table stored in the target node configuration table storage unit 40 based on the received target node configuration table.

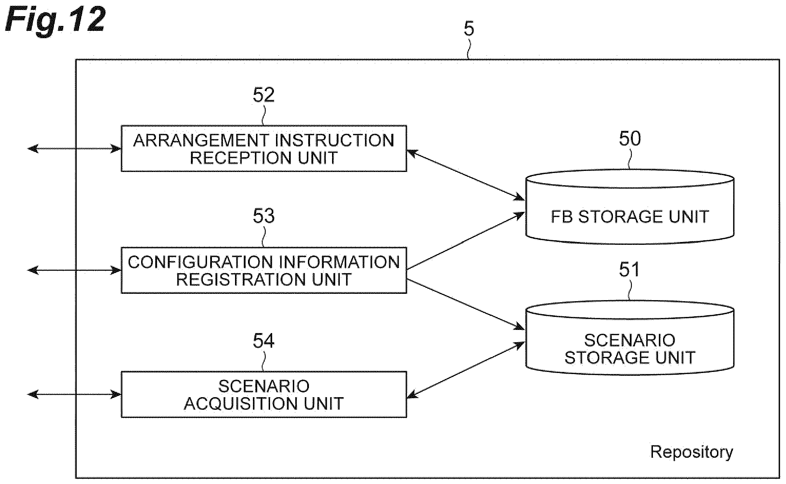

FIG. 12 is a functional block diagram of the Repository 5. As illustrated in FIG. 12, the Repository 5 is configured to include a FB storage unit 50, a scenario storage unit 51, an arrangement instruction reception unit 52 (an arrangement instruction receiving unit, an arrangement unit), a configuration information registration unit 53, and a scenario acquisition unit 54.

The FB storage unit 50 stores FBs.

The scenario storage unit 51 stores scenarios.

The arrangement instruction reception unit 52 receives the arrangement instruction transmitted from the Controller 3, acquires the FB (or a copy of the FB) corresponding to the identification information of the plurality of FBs included in the arrangement instruction from the FB storage unit 50, and creates the target node by arranging the FB in the creation position included in the arrangement instruction. The arrangement instruction reception unit 52 may issue an arrangement instruction to the Platform 6 including the FB in order to instruct the Platform 6 to perform actual arrangement. Moreover, upon receiving a FB copy instruction that requests a copy of the FB, including the identification information of the FB, transmitted from the Platform 6, the arrangement instruction reception unit 52 may acquire a copy of the FB corresponding to the identification information of the FB from the FB storage unit 50 and send the acquired copy of the FB to the Platform 6.

The configuration information registration unit 53 receives the FB or the scenario transmitted from the Controller 3 and registers the FB or the scenario by storing the same in the FB storage unit 50 or the scenario storage unit 51.

The scenario acquisition unit 54 receives a scenario acquisition request transmitted from the Controller 3, acquires a scenario indicated by the pointer of the scenario included in the request from the scenario storage unit 51, and sends the acquired scenario to the Controller 3.

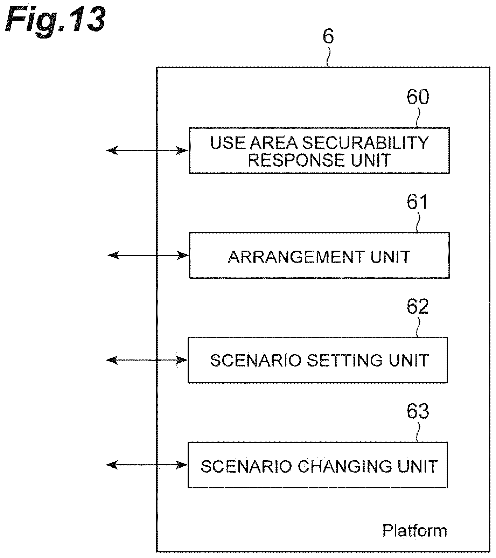

FIG. 13 is a functional block diagram of the Platform 6. As illustrated in FIG. 13, the Platform 6 is configured to include a use area securability response unit 60, an arrangement unit 61 (an arrangement instruction receiving unit, an arranging unit), a scenario setting unit 62, and a scenario changing unit 63.

The use area securability response unit 60 receives a use area securability checking request transmitted from the Controller 3, determines whether the use area can be secured on the Platform 6 based on the memory capacity included in the use area securability checking request, and sends the determination result to the Controller 3 as the use area securability. When the use area can be secured and an instruction to reserve or secure the area is included in the use area securability checking request, the use area securability response unit 60 secures the use area according to the instruction.

The arrangement unit 61 receives the arrangement instruction transmitted from the Repository 5 and arranges the FB included in the arrangement instruction on the Platform 6 based on the arrangement instruction. Moreover, the arrangement unit 61 may receive the arrangement instruction transmitted from the Controller 3, acquire the FB corresponding to the identification information of the plurality of FBs included in the arrangement instruction from the Repository 5 by transmitting the FB copy instruction to the Repository 5, and arrange the FB.

The scenario setting unit 62 receives the arrangement instruction transmitted from the Controller 3 and sets the scenario included in the setting instruction to the corresponding FB.

The scenario changing unit 63 receives a setting instruction to set the changed scenario transmitted from the Controller 3 and sets the changed scenario included in the setting instruction to the corresponding FB.

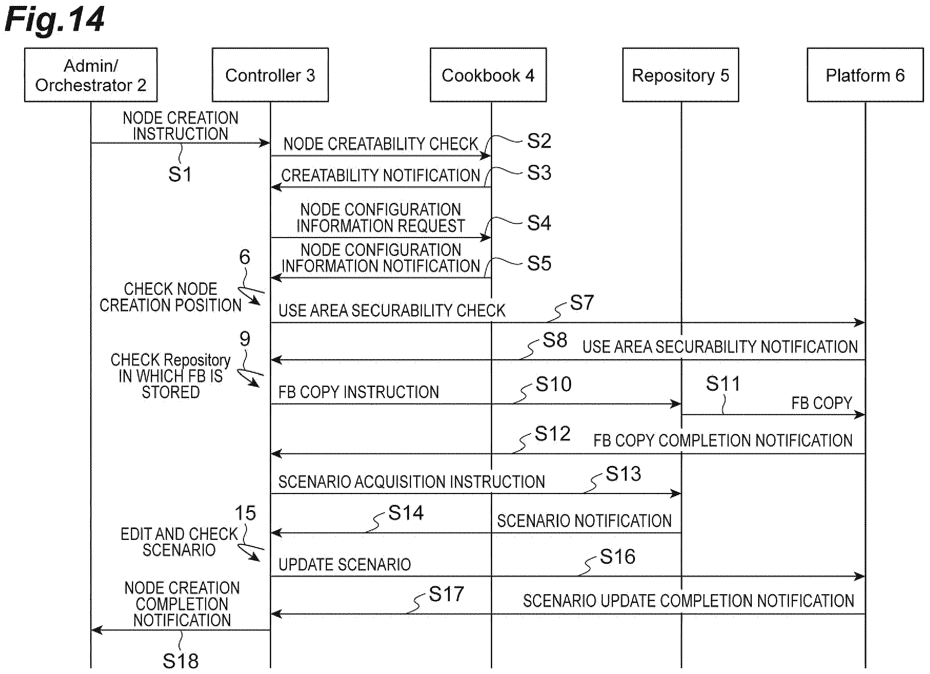

Next, an example of processing (provisioning) executed by the node creation system 1 will be described using the sequence diagram illustrated in FIG. 14.

First, the Admin/Orchestrator 2 transmits a node creation instruction to the Controller 3 (S1). Subsequently, the Controller 3 searches the CookBook 4 to check whether a node can be created (S2). Subsequently, the CookBook 4 sends a creatability notification to the Controller 3 (S3). Subsequently, the Controller 3 sends a node configuration information request to the CookBook 4 (S4). Subsequently, the CookBook 4 sends a node configuration information notification to the Controller 3 (S5). Subsequently, the Controller 3 checks a node creation position (S6).

Subsequently, the Controller 3 searches the Platform 6 to check whether a use area can be secured (S7). Subsequently, the Platform 6 sends a use area securability notification to the Controller 3 (S8). Subsequently, the Controller 3 checks the Repository 5 in which the FB is stored (S9). Subsequently, the Controller 3 transmits a FB copy instruction to the Repository 5 (S10). Subsequently, the Repository 5 transmits a FB copy to the Platform 6 (S11). Subsequently, the Platform 6 transmits a FB copy completion notification to the Controller 3 (S12).

Subsequently, the Controller 3 transmits a scenario acquisition instruction to the Repository 5 (S13). Subsequently, the Repository 5 notifies the scenario to the Controller 3 (S14). Subsequently, the Controller 3 edits and checks the scenario (S15). Subsequently, the Controller 3 issues a scenario update instruction to the Platform 6 (S16). Subsequently, the Platform 6 transmits a scenario update completion notification to the Controller 3 (S17). Subsequently, the Controller 3 transmits a node creation completion notification to the Admin/Orchestrator 2 (S18).

S10 and S11 may be replaced with the following process. That is, subsequently to S9, the Controller 3 transmits a FB copy instruction to the Platform 6. Subsequently, the Platform 6 transmits the FB copy instruction to the Repository 5. Subsequently, the Repository 5 transmits a FB copy to the Platform 6.

Next, an example of processing (dynamic removing by rewriting scenario) executed by the node creation system 1 will be described using the sequence diagram illustrated in FIG. 15.

First, the Admin/Orchestrator 2 transmits a node change instruction to the Controller 3 (S30). Subsequently, the Controller 3 searches the CookBook 4 to check whether a node can be created (S31). Subsequently, the CookBook 4 sends a creatability notification to the Controller 3 (S32). Subsequently, the Controller 3 transmits a node configuration information request to the CookBook 4 (S33). Subsequently, the CookBook 4 transmits a node configuration information notification to the Controller 3 (S34).

Subsequently, the Controller 3 edits and checks the scenario (S35). Subsequently, the Controller 3 issues a scenario update instruction to the Platform 6 (S36). Subsequently, the Platform 6 transmits a scenario update completion notification to the Controller 3 (S37). Subsequently, the Controller 3 transmits a FB removal instruction to the Platform 6 (S38). Subsequently, the Platform 6 transmits a removal completion notification to the Controller 3 (S39). Subsequently, the Controller 3 transmits a node change completion notification to the Admin/Orchestrator 2 (S40).

Next, an example of processing (dynamic adding by rewriting scenario) executed by the node creation system 1 will be described using the sequence diagram illustrated in FIG. 16.

First, the Admin/Orchestrator 2 transmits a node creation instruction to the Controller 3 (S50). Subsequently, the Controller 3 searches the CookBook 4 to check whether a node can be created (S51). Subsequently, the CookBook 4 sends a creatability notification to the Controller 3 (S52). Subsequently, the Controller 3 sends a node configuration information request to the CookBook 4 (S53). Subsequently, the CookBook 4 sends a node configuration information notification to the Controller 3 (S54).

Subsequently, the Controller 3 searches the Platform 6 to check whether a use area can be secured (S55). Subsequently, the Platform 6 sends a use area securability notification to the Controller 3 (S56). Subsequently, the Controller 3 checks the Repository 5 in which the FB is stored (S57). Subsequently, the Controller 3 transmits a FB copy instruction to the Repository 5 (S57). Subsequently, the Repository 5 transmits a FB copy to the Platform 6 (S59). Subsequently, the Platform 6 transmits a FB copy completion notification to the Controller 3 (S60).

Subsequently, the Controller 3 edits and checks the scenario (S61). Subsequently, the Controller 3 issues a scenario update instruction to the Platform 6 (S62). Subsequently, the Platform 6 transmits a scenario update completion notification to the Controller 3 (S63). Subsequently, the Controller 3 transmits a node creation completion notification to the Admin/Orchestrator 2 (S64).

S58 and S59 may be replaced with the following process. That is, subsequently to S57, the Controller 3 transmits a FB copy instruction to the Platform 6. Subsequently, the Platform 6 transmits the FB copy instruction to the Repository 5. Subsequently, the Repository 5 transmits a FB copy to the Platform 6.

Next, the operation and effects of the node creation system 1 having the configuration described in the present embodiment will be described.

According to the Controller 3 of the present embodiment, first, the creation instruction reception unit 300 receives a creation instruction to create a target node that provides a specific function. Subsequently, the configuration information acquisition unit 302 receives information on a plurality of FBs that form the target node and a scenario that defines a processing procedure of each of the plurality of FBs. Subsequently, the arrangement instruction unit 304 transmits an arrangement instruction to arrange the plurality of FBs that form the target node in combination. Subsequently, the setting instruction unit 306 transmits a setting instruction to set the scenario to the plurality of FBs arranged based on the arrangement instruction and creates the target node based on the transmission of the setting instruction. According to such a configuration, a plurality of FBs are arranged in combination and a scenario is set to the respective FBs whereby it is possible to create a target node in which each FB executes processing according to the set scenario so that the entire group of FBs provides a specific function. Moreover, it is possible to designate a configuration content or a processing content of a target node to be created in a target node configuration table using information on a plurality of FBs that form the target node and the scenario set to each of the plurality of FBs. As a result, it is possible to create nodes having a more flexible configuration.

In the Controller 3 of the present embodiment, the creation instruction may further include identification information of the Platform 6, and the arrangement instruction may further include the identification information of the Platform 6 included in the creation instruction and may indicate an instruction to arrange the plurality of FBs in the Platform 6 in combination. According to such a configuration, it is possible to easily and reliably designate a position at which the target node is created.

The Controller 3 of the present embodiment may further include a state table storage unit 307 that stores a target node state table in which the identification information of the created target node and the information on the plurality of FBs that form the created target node are correlated, a change instruction reception unit 308 that receives a change instruction to change the created target node to a changed target node, including the identification information of the created target node and identification information of the changed target node, and a change instruction unit 309 that acquires the information on the plurality of FBs correlated with the identification information of the created target node included in the change instruction in the target node state table, receives target node configuration information including a changed scenario which is the scenario correlated with the identification information of the changed target node included in the change instruction by controlling the configuration information acquisition unit 302, and transmits a setting instruction to set the changed scenario to the plurality of FBs corresponding to the acquired information on the plurality of FBs by controlling the setting instruction unit 306 so that the created target node is changed to the changed target node based on the transmission of the setting instruction. According to such a configuration, a scenario for realizing the function of a desired target node (the changed target node) is set to the plurality of FBs that form the created target node. As a result, it is possible to easily and reliably change the created target node to a desired target node.

In the Controller 3 of the present embodiment, the target node state table may further correlate the scenario set to each of the plurality of FBs that form the created target node, and the change instruction unit 309 may further acquire a scenario before change which is the scenario correlated with the identification information of the created target node included in the change instruction in the target node state table, compare the scenario before change with the changed scenario to determine a difference between the plurality of FBs that form the created target node and the plurality of FBs that form the changed target node, and change the plurality of FBs that form the created target node based on the determined difference. According to such a configuration, it is possible to reliably determine which one of the plurality of FBs that form the created target node is to be changed to change the created target node to a desired target node, for example. As a result, it is possible to more easily and more reliably change the created target node to a desired target node.

According to the node creation system 1 of the present embodiment, it is possible to create a target node by collaboration of the Controller 3, the CookBook 4, and the Repository 5. That is, a plurality of FBs are arranged in combination, and a scenario is set to each of the respective arranged FBs whereby it is possible to create a target node in which each FB executes processing according to the set scenario so that the entire group of FBs provides a specific function. Moreover, it is possible to designate a configuration content or a processing content of a target node to be created in a target node configuration table using information on a plurality of FBs that form the target node and the scenario set to each of the plurality of FBs. As a result, it is possible to create nodes having a more flexible configuration.

According to the node creation system 1 of the present embodiment, it is possible to create a target node by collaboration of the Controller 3, the CookBook 4, and the Platform 6. That is, a plurality of FBs are arranged in combination, and a scenario is set to each of the respective arranged FBs whereby it is possible to create a target node in which each FB executes processing according to the set scenario so that the entire group of FBs provides a specific function. Moreover, it is possible to designate a configuration content or a processing content of a target node to be created in a target node configuration table using information on a plurality of FBs that form the target node and the scenario set to each of the plurality of FBs. As a result, it is possible to create nodes having a more flexible configuration.

As described above, according to the node creation system 1 of the present embodiment, it is possible to construct a system which enables a core node configuration specific to services (audio, M2M, and the like). Moreover, it is possible to construct a system which can easily add and remove a new node function using FBs and a scenario held by each FB. Furthermore, it is possible to dynamically rearrange the scenario and the FBs in the target node created by the plurality of FBs using the Controller 3, the CookBook 4, and the Repository 5 which are constituent elements.

### Reference Signs List

1: Node creation system
2: Admin/Orchestrator
3: Controller
4: CookBook
5: Repository
6: Platform
20: Creation instruction unit
21: Change instruction unit
22: Configuration information registration instruction unit
30: Target node configuration table storage unit
41: Creatability response unit
42: Configuration information response unit
43: Configuration information registration unit
50: FB storage unit
51: Scenario storage unit
52: Arrangement instruction reception unit
53: Configuration information registration unit
54: Scenario acquisition unit
60: Use area securability response unit
61: Arrangement unit
62: Scenario setting unit
63: Scenario changing unit
300: Creation instruction reception unit
301: Creatability determination unit
302: Configuration information acquisition unit
303: Use area securability determination unit
304: Arrangement instruction unit
305: Scenario acquisition unit
306: Setting instruction unit
307: Configuration information response unit
308: Change instruction reception unit
309: Change instruction unit
310: Configuration information registration instruction reception unit
311: Configuration information registration instruction unit

## Claims

1. A control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function, the control node comprising:
a creation instruction receiving unit that receives a creation instruction to create the target node, including identification information of the target node;
a target node identification information transmitting unit that transmits the identification information of the target node included in the creation instruction to a configuration table storage node that stores a target node configuration table in which the identification information of the target node, identification information of the plurality of functional blocks that form the target node, and the scenario set to each of the plurality of functional blocks are correlated;
a configuration information receiving unit that receives target node configuration information including the identification information and the scenario of the plurality of functional blocks correlated with the transmitted identification information of the target node in the target node configuration table as a response based on the transmission of the target node identification information transmitting unit;
an arrangement instruction transmitting unit that transmits an arrangement instruction to arrange the plurality of functional blocks in combination, including the identification information of the plurality of functional blocks included in the target node configuration information, to a constituent element storage node that stores functional blocks or an infrastructure node in which the target node is arranged; and
a setting instruction transmitting unit that transmits a setting instruction to set the scenario included in the target node configuration information to the plurality of functional blocks arranged based on the arrangement instruction so that the target node is created based on the transmission of the setting instruction.

2. The control node according to claim 1, wherein
the creation instruction further includes identification information of the infrastructure node, and
the arrangement instruction further includes identification information of the infrastructure node included in the creation instruction and indicates an instruction to arrange the plurality of functional blocks in the infrastructure node in combination.

3. The control node according to claim 1 or 2, further comprising:
a state table storing unit that stores a target node state table in which the identification information of the created target node and information on the plurality of functional blocks that form the created target node are correlated;
a change instruction receiving unit that receives a change instruction to change the created target node to a changed target node, including the identification information of the created target node and identification information of the changed target node; and
a target node changing unit that acquires the information on the plurality of functional blocks correlated with the identification information of the created target node included in the change instruction in the target node state table, receives the target node configuration information including a changed scenario which is the scenario correlated with the identification information of the changed target node included in the change instruction by controlling the configuration information receiving unit, and transmits a setting instruction to set the changed scenario to the plurality of functional blocks corresponding to the acquired information on the plurality of functional blocks by controlling the setting instruction transmitting unit so that the created target node is changed to the changed target node based on the transmission of the setting instruction.

4. The control node according to claim 3, wherein
the target node state table further correlates the scenario set to each of the plurality of functional blocks that form the created target node, and
the target node changing unit further acquires a scenario before change which is the scenario correlated with the identification information of the created target node included in the change instruction in the target node state table, compares the scenario before change with the changed scenario to determine a difference between the plurality of functional blocks that form the created target node and the plurality of functional blocks that form the changed target node, and changes the plurality of functional blocks that form the created target node based on the determined difference.

5. A node creation system comprising:
a control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function;
a configuration table storage node that stores a target node configuration table in which identification information of the target node, identification information of the plurality of functional blocks that form the target node, and a scenario set to each of the plurality of functional blocks are correlated; and
a constituent element storage node that stores functional blocks, wherein
the control node includes:
a creation instruction receiving unit that receives a creation instruction to create the target node, including identification information of the target node;
a target node identification information transmitting unit that transmits the identification information of the target node included in the creation instruction to the configuration table storage node;
a configuration information receiving unit that receives target node configuration information;
an arrangement instruction transmitting unit that transmits an arrangement instruction to arrange the plurality of functional blocks in combination, including the identification information of the plurality of functional blocks included in the target node configuration information, to the constituent element storage node; and
a setting instruction transmitting unit that transmits a setting instruction to set the scenario included in the target node configuration information to the plurality of functional blocks arranged based on the arrangement instruction so that the target node is created based on the transmission of the setting instruction,
the configuration table storage node includes:
a target node identification information receiving unit that receives the identification information of the target node transmitted by the target node identification information transmitting unit; and
a configuration information transmitting unit that transmits target node configuration information including the identification information and the scenario of the plurality of functional blocks correlated with the identification information of the target node received by the target node identification information receiving unit in the target node configuration table to the control node, and
the constituent element storage node includes:
an arrangement instruction receiving unit that receives the arrangement instruction transmitted by the arrangement instruction transmitting unit; and
an arranging unit that arranges stored functional blocks corresponding to the identification information of the plurality of functional blocks included in the arrangement instruction.

6. A node creation system comprising:
a control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function;
a configuration table storage node that stores a target node configuration table in which identification information of the target node, identification information of the plurality of functional blocks that form the target node, and a scenario set to each of the plurality of functional blocks are correlated; and
an infrastructure node in which the target node is arranged, wherein
the control node includes:
a creation instruction receiving unit that receives a creation instruction to create the target node, including identification information of the target node;
a target node identification information transmitting unit that transmits the identification information of the target node included in the creation instruction to the configuration table storage node;
a configuration information receiving unit that receives target node configuration information;
an arrangement instruction transmitting unit that transmits an arrangement instruction to arrange the plurality of functional blocks in combination, including the identification information of the plurality of functional blocks included in the target node configuration information, to an infrastructure node in which the target node is arranged; and
a setting instruction transmitting unit that transmits a setting instruction to set the scenario included in the target node configuration information to the plurality of functional blocks arranged based on the arrangement instruction so that the target node is created based on the transmission of the setting instruction,
the configuration table storage node includes:
a target node identification information receiving unit that receives the identification information of the target node transmitted by the target node identification information transmitting unit; and
a configuration information transmitting unit that transmits target node configuration information including the identification information and the scenario of the plurality of functional blocks correlated with the identification information of the target node received by the target node identification information receiving unit in the target node configuration table to the control node, and
the infrastructure node includes:
an arrangement instruction receiving unit that receives the arrangement instruction transmitted by the arrangement instruction transmitting unit; and
an arranging unit that arranges functional blocks corresponding to the identification information of the plurality of functional blocks included in the arrangement instruction.

7. A node creation method executed by a control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function, the node creation method comprising:
a creation instruction receiving step of receiving a creation instruction to create the target node, including identification information of the target node;
a target node identification information transmitting step of transmitting the identification information of the target node included in the creation instruction to a configuration table storage node that stores a target node configuration table in which the identification information of the target node, identification information of the plurality of functional blocks that form the target node, and the scenario set to each of the plurality of functional blocks are correlated;
a configuration information receiving step of receiving target node configuration information including the identification information and the scenario of the plurality of functional blocks correlated with the transmitted identification information of the target node in the target node configuration table as a response based on the transmission in the target node identification information transmitting step;
an arrangement instruction transmitting step of transmitting an arrangement instruction to arrange the plurality of functional blocks in combination, including the identification information of the plurality of functional blocks included in the target node configuration information, to a constituent element storage node that stores functional blocks or an infrastructure node in which the target node is arranged; and
a setting instruction transmitting step of transmitting a setting instruction to set the scenario included in the target node configuration information to the plurality of functional blocks arranged based on the arrangement instruction so that the target node is created based on the transmission of the setting instruction.

8. A node creation method executed by a node creation system including:
a control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function;
a configuration table storage node that stores a target node configuration table in which identification information of the target node, identification information of the plurality of functional blocks that form the target node, and a scenario set to each of the plurality of functional blocks are correlated; and
a constituent element storage node that stores functional blocks, the node creation method comprising:
a creation instruction receiving step of allowing the control node to receive a creation instruction to create the target node, including identification information of the target node;
a target node identification information transmitting step of allowing the control node to transmit the identification information of the target node included in the creation instruction to the configuration table storage node;
a target node identification information receiving step of allowing the configuration table storage node to receive the identification information of the target node transmitted in the target node identification information transmitting step;
a configuration information transmitting step of allowing the configuration table storage node to transmit target node configuration information including the identification information and the scenario of the plurality of functional blocks correlated with the identification information of the target node received in the target node identification information receiving step in the target node configuration table to the control node;
a configuration information receiving step of allowing the control node to receive target node configuration information;
an arrangement instruction transmitting step of allowing the control node to transmit an arrangement instruction to arrange the plurality of functional blocks in combination, including the identification information of the plurality of functional blocks included in the target node configuration information, to the constituent element storage node;
an arrangement instruction receiving step of allowing the constituent element storage node to receive the arrangement instruction transmitted in the arrangement instruction transmitting step;
an arranging step of allowing the constituent element storage node to arrange stored functional blocks corresponding to the identification information of the plurality of functional blocks included in the arrangement instruction; and
a setting instruction transmitting step of allowing the control node to transmit a setting instruction to set the scenario included in the target node configuration information to the plurality of functional blocks arranged based on the arrangement instruction so that the target node is created based on the transmission of the setting instruction.

9. A node creation method executed by a node creation system including:
a control node that arranges a plurality of functional blocks that provides a predetermined function in combination and sets a scenario that defines a processing procedure of each functional block or all functional blocks to each of the respective arranged functional blocks to thereby create a target node in which each functional block executes processing according to the set scenario so that an entire group of functional blocks provides a specific function;
a configuration table storage node that stores a target node configuration table in which identification information of the target node, identification information of the plurality of functional blocks that form the target node, and a scenario set to each of the plurality of functional blocks are correlated; and
an infrastructure node in which the target node is arranged, the node creation method comprising:
a creation instruction receiving step of allowing the control node to receive a creation instruction to create the target node, including identification information of the target node;
a target node identification information transmitting step of allowing the control node to transmit the identification information of the target node included in the creation instruction to the configuration table storage node;
a target node identification information receiving step of allowing the configuration table storage node to receive the identification information of the target node transmitted in the target node identification information transmitting step;
a configuration information transmitting step of allowing the configuration table storage node to transmit target node configuration information including the identification information and the scenario of the plurality of functional blocks correlated with the identification information of the target node received in the target node identification information receiving step in the target node configuration table to the control node;
a configuration information receiving step of allowing the control node to receive target node configuration information;
an arrangement instruction transmitting step of allowing the control node to transmit an arrangement instruction to arrange the plurality of functional blocks in combination, including the identification information of the plurality of functional blocks included in the target node configuration information, to the infrastructure node;
an arrangement instruction receiving step of allowing the infrastructure node to receive the arrangement instruction transmitted in the arrangement instruction transmitting step;
an arranging step of allowing the infrastructure node to arrange functional blocks corresponding to the identification information of the plurality of functional blocks included in the arrangement instruction; and
a setting instruction transmitting step of allowing the control node to transmit a setting instruction to set the scenario included in the target node configuration information to the plurality of functional blocks arranged based on the arrangement instruction so that the target node is created based on the transmission of the setting instruction.
